# EUROPEAN PATENT APPLICATION

(11) **EP 2 302 852 A1**
(43) Date of publication of application: **30.03.2011**
(21) Application number: 09768800.6
(22) Date of filing: 26.06.2009
(51) Int. Cl.: H04L 27/00

(54) **DEVICE, METHOD AND SYSTEM FOR TRANSMITTING DIGITAL BROADCASTING SIGNAL**

(30) Priority: 27.06.2008 CN 200810126458
(71) Applicant: Beijing Nufront Mobile Multimedia Tech. Co., Ltd., Beijing 100084 (CN)
(72) Inventor: BAO, Dongshan, Beijing 100084 (CN); LIU, Fei, Beijing 100084 (CN); WANG, Bin, Beijing 100084 (CN); YAO, Yang, Beijing 100084 (CN)
(74) Representative: Delumeau, François Guy
(86) International application number: PCT/CN2009/072464
(87) International publication number: WO 2009/155875

(57) **Abstract**

A devices for transmitting digital Broadcast signed comprises: at least a first encoding unit, each of which encodes data of a sub-channel with forward error correction encoding; at least a time-domain interleaving unit, each of which receives data output from a first encoding unit and performs interleaving in time-domain on the encoded data; a first multiplexing unit, which multiplexes the interleaved data output from each of the time-domain interleaving unit into Main Service Channel (MSC) data; a second encoding unit, which performs forward error correction encoding on a second set of data to obtain Fast Information Channel (FIC) data; a differential modulating unit, which performs differential modulation on the FIC data by using a first modulation mode and on the MSC data by using a second modulation mode, wherein the modulation level of the first modulation mode is lower than that of the second modulation mode; and a frame generating and transmitting unit, which generates signal unit transmission frames by using differential-modulation symbol sequences generated by the differential modulating unit and transmitting said signal unit transmission frames.

## Description

The present application claims the priority of Patent Application No. 200810126458.6 tided "Device, Method and System for Digital Broadcast Signal" and filed on June 27, 2008, the contents of which are incorporated herein by reference.

### FIELD OF THE INVENTION

The present invention relates to the art of mobile multimedia broadcasting technology, particularly to a device for transmitting digital broadcast signal, and further to a method and system for transmitting digital broadcast signal.

### BACKGROUND OF THE INVENTION

At present, the mainstream mobile TV/mobile multimedia broadcasting transmission standard around the world comprises the Digital Audio Broadcast (DAB) series standard, the Digital Video Broadcasting Handheld (DVB-H) standard and the MediaFLO standard. As far as the channel bandwidth is concerned, the DAB series standard uses a mode of operation with a bandwidth of 1.712 MHz, while the DVB-H standard and the MediaFLO standard use a mode of operation with various bandwidths.

In the DAB system, when the transmitter is transmitting the digital broadcast signal, it is required to transmit a first set of data over a Main Service Channel (MSC) and data over a Fast Information Channel (FIC). The data mainly comprises audio service, video service, data service or the like. The data mainly comprises the configuration information, the service information of the service data or the like. For MSC, the DAB system performs differential modulation by Differential Quadrature Phase Shift Keying (DQPSK). It mainly suffers from two drawbacks as follows.
1. The modulation is performed in a fixed manner and is not flexible.
2. Only a differential modulation of low level is used, so that the utilization rate of the frequency resource is low.

### SUMMARY OF THE INVENTION

In view of the above, the technical problem to be solved by the present invention is to provide a device for transmitting digital broadcast signal to overcome the drawbacks in the DAB system.

In an embodiment of a device for transmitting digital broadcast signal, the device comprises: at least a first encoding unit, each of which performs forward error correction encoding on data in a sub-channel; at least a time-domain interleaving unit, each of which receives the encoded data output from one first encoding unit and performs interleaving in tiine-domain on the encoded data; a first multiplexing unit, which multiplexes the interleaved data output from each of the time-domain interleaving unit into MSC data; a second encoding unit, which performs forward error correction encoding on a second set of data to obtain FIC data; a differential modulating unit, which performs differential modulation on the FIC data with a first modulation mode and on the MSC data with a second modulation mode, wherein the modulation level of the first modulation mode is lower than that of the second modulation mode; and a frame generating and transmitting unit, which generates signal unit transmission frames by using differential-modulation symbol sequences generated by the differential modulating unit and transmits said signal unit transmission frames. In this embodiment, two modulation modes can be used to perform differential modulation on the FIC data and MSC data, respectively, which greatly improves the flexibility of modulation. In addition, since the modulation on the MSC data is performed by a modulation mode of high level, it is possible to substantially improve the utilization rate of the frequency resource.

Another technical problem to be solved by the present invention is to provide a method for transmitting digital broadcast signal. In some embodiments, the method comprises the steps of: performing forward error correction encoding and interleaving in time-domain on the data in each sub-channel separately; multiplexing the data interleaved in time-domain in each sub-channel into MSC data; performing forward error correction encoding on a second set of data to obtain FIC data; performing differential modulation on the FIC data with a first modulation mode and on the MSC witch a second modulation mode, wherein the modulation level of the first modulation mode is lower than that of the second modulation mode; generating signal unit transmission frames by using differential-modulation symbol sequences generated by the differential modulation and transmitting said signal unit transmission frames. In this embodiment, two modulation modes can be used to perform differential modulation on the FIC data and MSC data, respectively, which greatly improves the flexibility of modulations. In addition, since the modulation on the MSC data is performed by a modulation mode of high level, it is possible to substantially improve the utilization rate of the frequency resource.

A further technical problem to be solved by the present invention is to provide a system for transmitting digital broadcast signal. In some embodiments, the system comprises: N devices for transmitting digital broadcast signal, wherein N is an integer larger than 1; and a frequency-division multiplexing unit, which frequency-division multiplexes N signal unit transmission frames generated by said N devices for transmitting digital broadcast signal into one-path baseband transmission frame and transmits said baseband transmission frame. With this system, multiple-path digital broadcast signals can be transmitted.

### BRIEF DESCRIPTION OF THE DRAWINGS

FIG. 1 is a schematic diagram showing an embodiment of a device proposed in the present invention;
FIG. 2 is a schematic diagram showing another embodiment of a device proposed in the present invention;
FIG 3 is a schematic diagram showing another embodiment of a device proposed in the present invention
FIG. 4 is a flow chart showing an embodiment of a method proposed in the present invention;
FIG. 5 is a flow chart showing another embodiment of a method proposed in the present invention;
FIG. 6 is a schematic diagram showing an embodiment of a system proposed in the present invention.

### DETAILED DESCRIPTION OF THE EMBODIMENTS

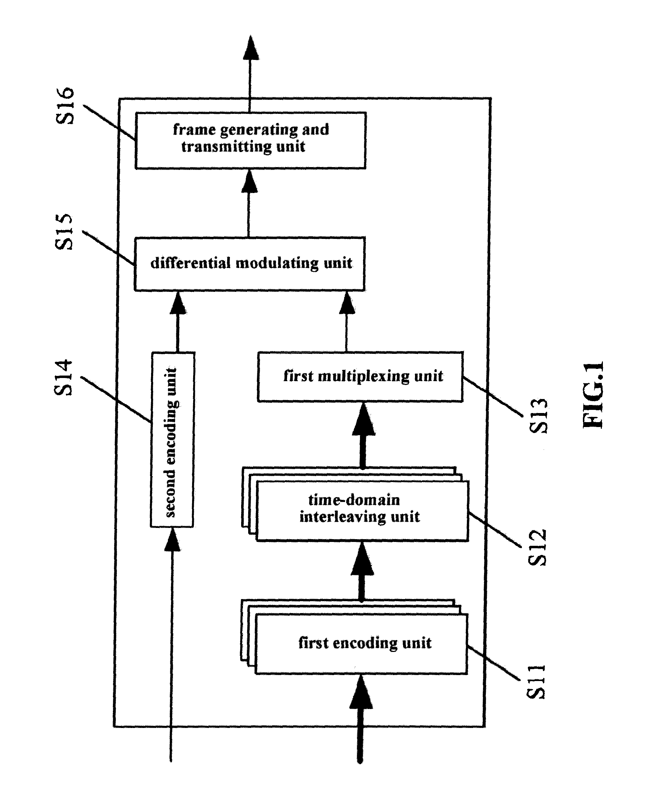

FIG. 1 shows the structure of a device for transmitting digital broadcast signal, 100, which comprises at least a first encoding unit S 11, at least a time-domain interleaving unit S12, a first multiplexing unit S13, a second encoding unit S14, a differential modulating unit S15, and a frame generating and transmitting unit S16.

Each of the first encoding unit S11 performs forward error correction encoding on the data in a sub-channel, while each of the time-domain interleaving unit S12 receives the encoded data output from one first encoding unit S11 and performs interleaving in time-domain on the encoded data.

The first multiplexing unit S13 multiplexes the interleaved data output from each of the time-domain interleaving unit S12 into MSC data. The second encoding unit S14 performs forward error correction encoding on a second set of data information to obtain FIC data. The differential modulating unit S15 performs differential modulation on FIC data with a first modulation mode and on MSC data with a second modulation mode, wherein the modulation level of the first modulation mode is lower than that of the second modulation mode. The frame generating and transmitting unit S16 generates signal unit transmission frames by using the differential-modulation symbol sequences generated by the differential modulating unit S 15 and transmits said signal unit transmission frames.

Herein, there are many forward error correction encoding methods available for the first encoding unit S11. As an optional method, the first encoding unit S11 performs encoding on the data in the sub-channel with a Low Density Parity Check (LDPC) encoding method. In the same way, there are also many forward error correction encoding methods available for the second encoding unit S14. As an optional method, the second encoding unit S14 performs encoding on the second set of data with a convolutional encoding method.

During the operation of the system, the modes in which interleaving in time-domain is performed on the data in the sub-channel includes but not limited to the following two modes.
1. The interleaving in time-domain is performed on the data in the sub-channel in a mod.
2. The interleaving in time-domain is performed on the data in the sub-channel in a variable mode.

In the case that the first mode is selected, the time-domain interleaving unit S12 receives data from the first encoding unit S11and then directly performs interleaving in time-domain on the received data with preset fixed parameters. In the case that the second mode is selected, the time-domain interleaving unit S12 receives data from the first encoding unit S11 and then performs interleaving in time-domain on the received data according to the interleaving depth indicated by the configuration information. For the first mode, it is very simple to realize, but the interleaving mode is single and not flexible. For the second mode, the interleaving mode is diverse and flexible, but it is relatively complex to realize.

The interleaved data in each sub-channel output from each of the time-domain interleaving unit S12 are composed into a Common Interleaved Frame (CIF) in the first multiplexing unit S13, i.e., are multiplexed into MSC data. In the differential modulating unit S15, differential modulation is performed on MSC data output from the first multiplexing unit S 13 and on FIC data output from the second encoding unit S14 with different modulation modes.

The differential modulation can be performed on FIC data with DQPSK mode and on MSC data with Octal Differential Phase Shift Keying (8DPSK) mode. The differential modulation on MSC data can also be performed with 16-ary Differential Amplitude and Phase Shift Keying (16DAPSK) mode or with a mode of higher level. The advantages of 8DPSK lie in that it has strong anti-interference capability, excellent BER performance and high spectrum efficiency, and can eliminate the phase ambiguity during coherent demodulation of Octal Absolute Phase Shift Keying (8PSK), so that the performance of the system is improved. The advantages of 16DAPSK lie in that it has strong anti-interference capability, excellent BER performance and high spectrum efficiency, and can also eliminate the phase ambiguity during coherent demodulation of 16-ary Absolute Phase Shift Keying (16PSK).

During operation of the system, the modes in which differential modulation is performed on MSC data includes, but not limited to the following two modes.

A. The differential modulation on MSC data is performed in a fixed mode.

B. The differential modulation on MSC data is performed in a variable mode.

In the case that the mode A is selected, the differential modulating unit S15 directly performs differential modulation on MSC data according to a preset fixed mode. In the case that the mode B is selected, the differential modulating unit S15 is required to performs differential modulation on MSC data according to the modulation mode indicated by the configuration information.

Upon receiving differential-modulation symbols sequences from the differential modulating units 15, the frame generating and transmitting unit S16 may perform orthogonal frequency-division multiplexing (OFDM) modulation on the differential-modulation symbol sequences along with phase reference symbols and empty symbols to generate respective OFDM symbols, and then multiplex the generated continuous OFDM symbols into signal unit transmission frames. Alternatively, the frame generating and transmitting unit S16 performs OFDM modulation on the differential-modulation symbol sequences along with phase reference symbols to generate respective OFDM symbols, and then multiplexes the generated continuous OFDM symbols along with empty symbols into signal unit transmission frames. Herein, said signal unit transmission frames comprise synchronization channels, FIC, and MSC.

FIG. shows a more specific structure of the device for transmitting digital broadcast signal in an application scenario. In this application scenario, interleaving in time-domain is performed on the data in the sub-channel in a variable mode, differential modulation on MSC data is performed in a fixed mode, and thus it is required to indicate the interleaving depth to be used. It is necessary to set parameters for defining sub-channel organization in the configuration information, and said parameters include but not limited to the symbol mapping mode.

In FIC, a punctured convolutional encoding unit S24 performs punctured convolutional encoding on the second set of data including the configuration information.

In MSC, a LDPC encoding unit S21 and a time-domain interleaving unit S22 connected in series perform LDPC encoding and interleaving in time-domain separately on the data in a sub-channel; and a main service channel multiplexing unit S23 composes the interleaved data in each sub-channel output from each of the time-domain interleaving unit S22 into CIF.

Herein, the capacity of a sub-channel is calculated in terms of Capacity Unit (CU), wherein the magnitude of a CU is 32 x n bits, and the value of n is related with the symbols mapping mode, i.e., n is related with the mode of differential modulation. For example, when the symbol mapping mode is Octal Phase Shift Keying (8PSK), n = 3; and when the symbol mapping mode is 16-ary Phase Shift Keying (16PSK), n = 4.

After the LDPC encoding unit S21 performs LDPC encoding on the data in a sub-channel, the time-domain interleaving unit S22 performs interleaving in time-domain on the encoded data according to the interleaving depth indicated by the configuration information between LDPC code blocks of the same sub-channel. Alternatively, the time-domain interleaving unit S22 performs bit-based convolutional interleaving on the encoded data according to said interleaving depth.

The main service channel multiplexing unit S23 arranges CUs of the same length continuously and inserts filling data between CUs of different lengths, so as to compose the data interleaved in time-domain in each sub-channel into CIF.

A bit transmission frame multiplexing unit S25 performs bit transmission frame multiplexing on the CIF obtained by the main service channel multiplexing unit S23 and the convolutional encoded FIC data obtained by the punctured convolutional encoding unit S24, so that two-path of data are combined into one-path data bit stream. A symbol mapping unit S26 performs symbol mapping on CIF, namely MSC data with a fixed mapping mode (8PSK or 16PSK), and on FIC data with QPSK. Then, a modulating unit S27 performs corresponding differential modulations on CIF and FIC data to obtain differential-modulation symbol sequences. Alternatively, the modulating unit S27 performs differential modulation on the same sub-carrier of neighboring OFDM symbols.

An OFDM symbol generating unit S28 performs OFDM modulation on the differential-modulation symbol sequences along with phase reference symbols and empty symbols to generate respective OFDM symbols. A symbol transmission frame multiplexing unit S29 multiplexes continuous OFDM symbols generated by the OFDM symbol generating unit S28 into signal unit transmission frames.

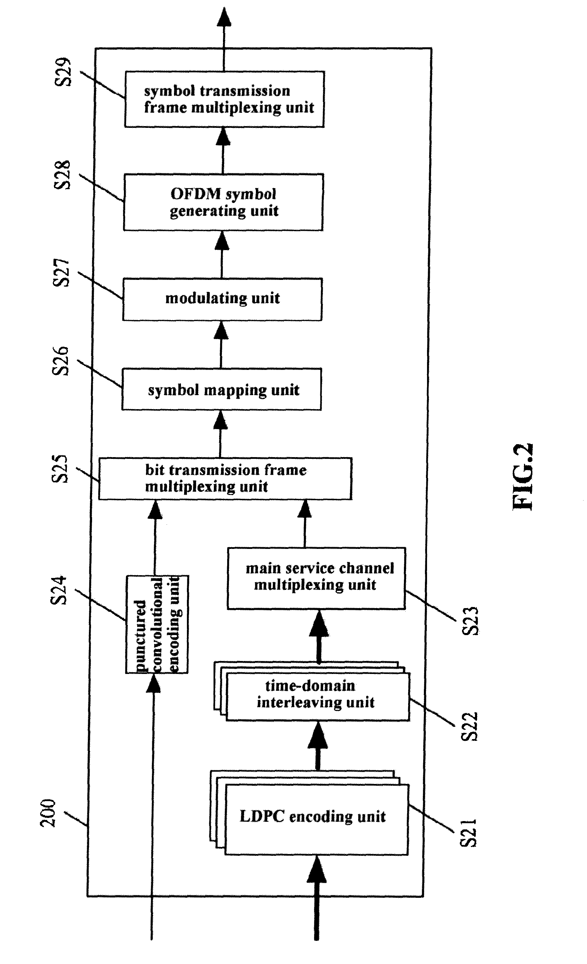

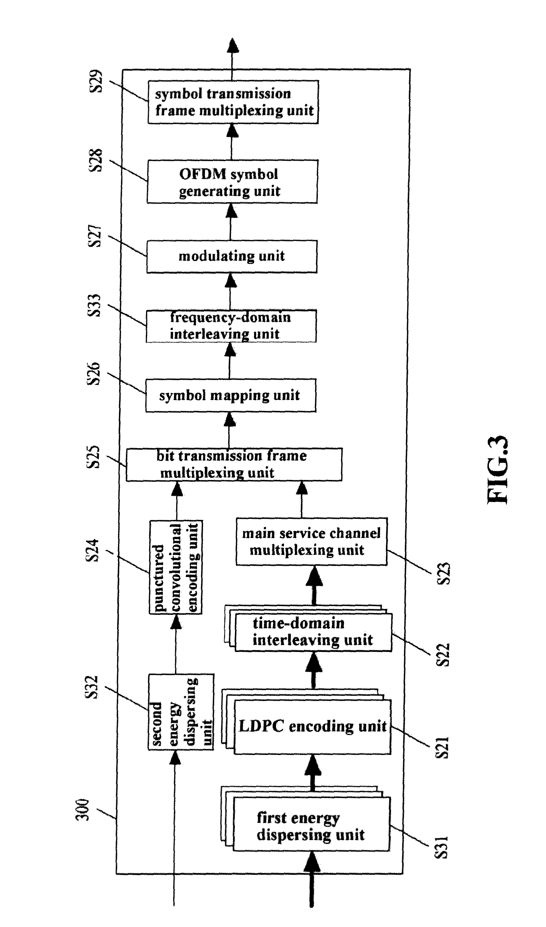

In the embodiments shown in FIG. 2, for the purpose of limiting the length of continuous "0" or continuous "1" which appear in the data in the sub-channel so that the spectrum of the data is dispersed and maintains steady, a first energy dispersing unit may be added before each of the LDPC encoding unit S21 to performs energy dispersing on the data in each sub-channel. As shown in FIG. 3, the first energy dispersing unit S31 performs modulo-2 addition on the bit stream of the data bit by bit with the pseudo-random sequence according to input sequence to generate energy-dispersed data. In the same way, also a second energy dispersing unit S32 may be added before the punctured convolutional encoding unit S24 to perform energy dispersing on the second set of data. Furthermore, a frequency-domain interleaving unit S33 may be added between the symbol mapping unit S26 and the modulating unit S27 to perform interleaving in frequency-domain on the mapped symbols from the symbol mapping unit 26. The frequency-domain interleaving unit S33 divides the mapped symbols into blocks according to the number of effective sub-carriers K of OFDM symbols in different transmission modes and performs interleaving in frequency-domain on the blocks, and then the modulating unit S27 performs differential modulation on the symbols interleaved in frequency-domain. Herein, the interleaving in frequency-domain refers to the interleaving on blocks of symbols, and the magnitude of the interleaved block is equal to the number of effective sub-carriers K.

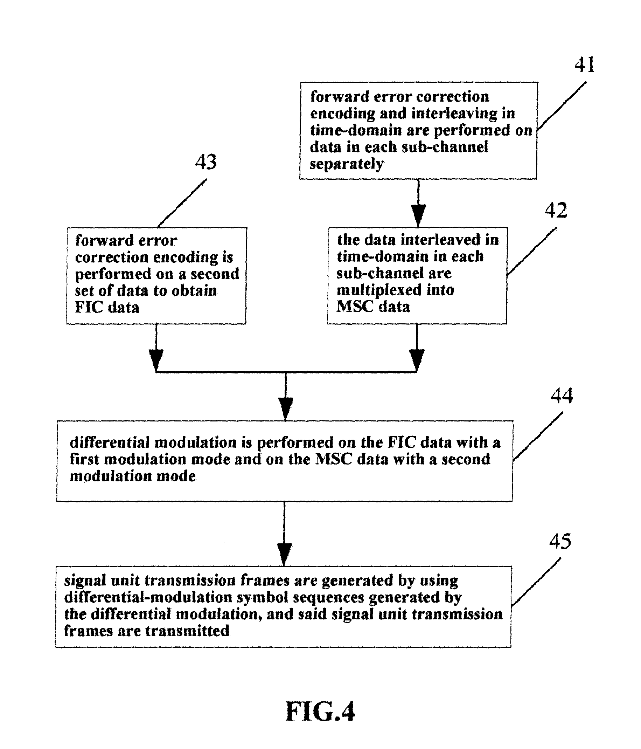

FIG 4 shows a flow chart of a method for transmitting digital broadcast signal, which comprises the following steps.

In step 41, forward error correction encoding and interleaving in time-domain are performed on the data in each sub-channel separately.

In step 42, the data interleaved in time-domain in each sub-channel are multiplexed into MSC data, namely, the interleaved data in each sub-channel are composed into CIF.

In step 43, forward error correction encoding is performed on a second set of data to obtain FIC data.

In step 44, differential modulation is performed on FIC data with a first modulation mode and on MSC data with a second modulation mode.

Herein, the modulation level of the first modulation mode is lower than that of the second modulation mode.

In step 45, signal unit transmission frames are generated by using differential-modulation symbol sequences generated by the differential modulation, and said signal unit transmission frames are transmitted.

Herein, there are many forward error correction encoding methods available for the data in each sub-channel. As an optional method, the encoding on the data in the sub-channel is performed with LDPC encoding method. In the same way, there are also many forward error correction encoding methods available for the second set of data. As an optional method, the encoding on the second set of data is performed with a convolutional encoding method.

During the operation of the system, the mode of interleaving in time-domain on the data in the sub-channel includes, but not limited to the following two modes.
1. The interleaving in time-domain is performed on the data in the sub-channel in a fixed mode.
2. The interleaving in time-domain is performed on the data in the sub-channel in a variable mode.

In the case that the first mode is selected, when the interleaving is performed on the data in the sub-channel, the interleaving in time-domain on the received data can be directly performed with preset fixed parameters. In the case that the second mode is selected, when the interleaving is performed on the data in the sub-channel, the interleaving in time-domain on the received data is required to be performed according to the interleaving depth indicated by the configuration information. For the first mode, it is very simple to realize, but the interleaving mode is single and not flexible. For the second mode, the interleaving mode is diverse and flexible, but it is relatively complex to realize.

When the differential modulation is performed, the differential modulation can be performed on FIC data with DQPSK mode and on MSC data with 8DPSK. The differential modulation on MSC data can also be performed with 16DAPSK mode or a mode of higher level.

During the operation of the system, the mode in which differential modulation is performed on MSC data includes, but not limited to the following two modes.

A. The differential modulation on MSC data is performed in a fixed mode;

B. The differential modulation on MSC data is performed in a variable mode.

In the case that the mode A is selected, when the differential modulation is performed on MSC data, the differential modulations on MSC data can be directly performed according to a preset fixed mode. In the case that the mode B is selected, when the differential modulation is performed on MSC data, the differential modulation on MSC data is required to be performed according to the modulation mode indicated by the configuration information.

After the differential-modulation symbol sequences are obtained, OFDM modulation can be performed on the differential-modulation symbol sequences along with phase reference symbols and empty symbols to generate respective OFDM symbols, and then the generated continuous OFDM symbols are multiplexed into signal unit transmission frames. Alternatively, OFDM modulation is performed on the differential-modulation symbol sequences along with phase reference symbols to generate respective OFDM symbols, and then the generated continuous OFDM symbols along with empty symbols are multiplexed into signal unit transmission frames.

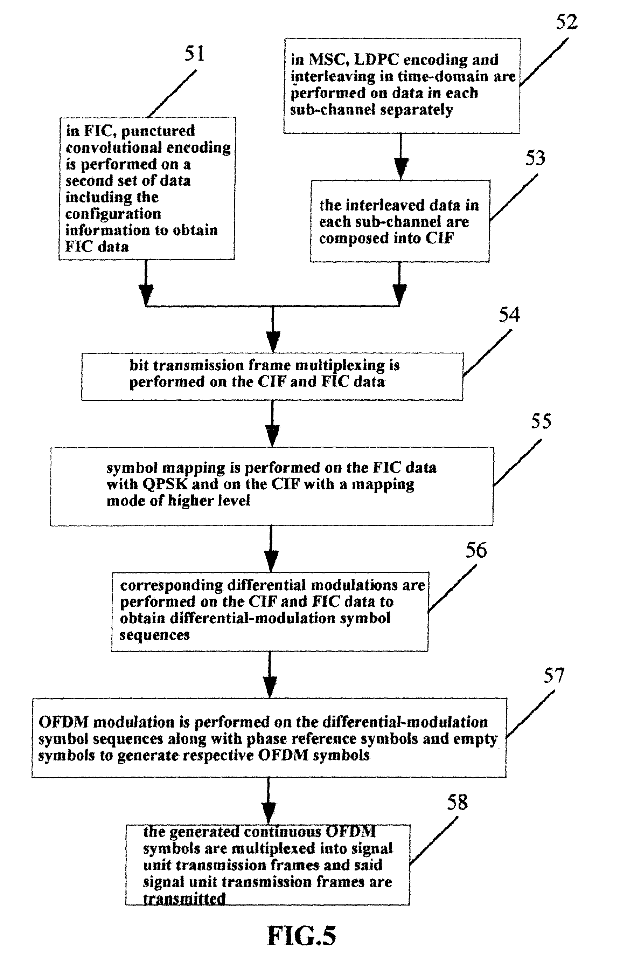

FIG 5 shows a more specific flow chart of a method for transmitting digital broadcast signal in an application scenario. In this application scenario, interleaving in time-domain is performed on the data in the sub-channel in a variable mode, differential modulation on MSC data is performed in a fixed mode, and thus it is required to indicate the interleaving depth to be used. It is necessary to set parameters for defining sub-channel organization in the configuration information, and said parameters include but not limited to the symbol mapping mode.

In step 51, in FIC, punctured convolutional encoding is performed on a second set of data including the configuration information to obtain FIC data.

In step 52, in MSC, LDPC encoding and interleaving in time-domain are performed on the data in each sub-channel separately.

In each sub-channel, after LDPC encoding is performed on the data, the interleaving in time-domain is performed on the encoded data according to the interleaving depth indicated by the configuration information between LDPC code blocks of the same sub-channel. Alternatively, bit-based convolutional interleaving is performed on the encoded according to said interleaving depth.

In step 53, the interleaved data in each sub-channel are composed into CIF. By arranging CUs of the same length continuously and inserting filling data between CUs of different lengths, it is realized to compose the data interleaved in time-domain in each sub-channel into CIF.

In step 54, bit transmission frame multiplexing is performed on CIF and FIC data so as to combine two-path of data into one-path data bit stream.

In step 55, symbol mapping is performed on FIC data with QPSK and on CIF with a mapping mode of higher level (8PSK or 16PSK).

In step 56, corresponding differential modulations are performed on CIF and FIC data to obtain differential-modulation symbol sequences. Alternatively, differential modulation is performed on the same sub-carrier of neighboring OFDM symbols.

In step 57, OFDM modulation is performed on differential-modulation symbol sequences along with phase reference symbols and empty symbols to generate respective OFDM symbols.

In step 58, the generated continuous OFDM symbols are multiplexed into signal unit transmission frames and said signal unit transmission frames are transmitted.

In the embodiment shown in FIG. 5, for the purpose of limiting the length of continuous "0" or continuous "1" which appear in the data in the sub-channel so that the spectrum of the data is dispersed and maintains steady, a step of energy dispersing may be added before step 52 to perform energy dispersing on the data in each sub-channel. In the same way, a step of energy dispersing may also be added before step 51 to perform energy dispersing on the second set of data.

Furthermore, a process of interleaving in frequency-domain may be added between step 55 and 56 to perform interleaving in frequency-domain on the mapped symbols. The mapped symbols are divided into blocks according to the number of effective sub-carriers K of OFDM symbols in different transmission modes and the interleaving in frequency-domain is performed on the blocks, and then differential modulation is performed on the symbols interleave in frequency-domain. Herein, the interleaving in frequency-domain refers to the interleaving on blocks of symbols, and the magnitude of the interleave block is equal to the number of effective sub-carriers K.

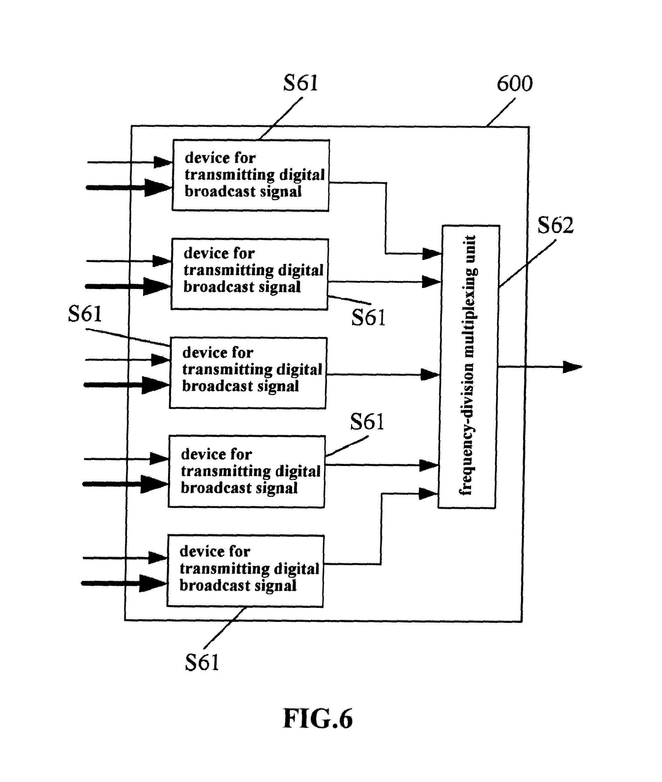

FIG. 6 shows the structure of a system for transmitting digital broadcast signal 600, which comprises N devices for transmitting digital broadcast signal S61 and a frequency-division multiplexing unit S62, wherein N is an integer larger than 1.

Said devices for transmitting digital broadcast signal S61 can use any one of the devices for transmitting digital broadcast signal described in the above embodiments. The frequency-division multiplexing unit S62 frequency-division multiplexes N-path signal unit transmission frames generated by said N devices for transmitting digital broadcast signal S61 into one-path baseband transmission frame and transmits said baseband transmission frame.

It should be noted that, the frequency-division multiplexing unit S62 moves said N-path signal unit transmission frames to N frequency points, and the interval between neighboring two frequency points is 1.544 MHz. In some cases, for example in the case that a bandwidth of 8 MHz is provided, 5-path signal unit transmission frames (i.e. N = 5) can be frequency-division multiplexed and transmitted, so that the spectrum efficiency can be improved as much as possible.

In another embodiment of the method for transmitting digital broadcast signal, N-path signal unit transmission frames can be generated by using the methods for transmitting digital broadcast signal described in the above embodiments, and then said N-path signal unit transmission frames are frequency-division multiplexed into one-path baseband transmission frame and said baseband transmission frame are transmitted.

Alternatively, N-path signal unit transmission frames are moved to N frequency points, and the interval between neighboring two frequency points is 1.544 MHz. In some cases, for example in the case that a bandwidth of 8 MHz is provided, 5-path signal unit transmission frames (i.e. N = 5) can be frequency-division multiplexed and transmitted, so that the spectrum efficiency can be improved as much as possible.

The present invention further provides an integrated circuit for implementing the method, device or system described in any of the above embodiments. The present invention further provides a computer readable medium for storing programs which are useful for implementing the methods described in any of the above embodiments.

Furthermore, it should be noted that the method or devices in the above embodiments can be used to not only generate a baseband signal, but also generate a non-baseband signal. In other words, the baseband signal transmission frame generated by using the above embodiments can be a baseband signal, and can also be a non-baseband signal.

It will be appreciated for the person skilled in the art that various exemplary steps of method and units of device described herein with reference to the disclosed embodiments can be implemented by the electronic hardware, software, or the combination thereof. To clearly show the interchangeability between hardware and software, a general description has been made to the various exemplary steps and units with respect to their functional forms. Whether this functionality is implemented by hardware or software depends on the specific application and the design constraints realized by the whose system. The person skilled in the art may implement the described functionality in a variety of ways in connection with each specific application, but it should not be construed that this implementation departs from the scope of the present invention.

The exemplary units described in the embodiments disclosed herein can be implemented or fulfilled by means of a general purpose processor, a digital signal processor (DSP), an application specific integrated circuit (ASIC), a field programmable gate array (FPGA) or other programmable logic devices, a discrete gate or transistor logic, a discrete hardware assembly, or any combination thereof. The general purpose processor can be a microprocessor, but in another case the processor can be any conventional processor, controller, microcontroller, or state machine. The processor can also be implemented as a combination of computing devices, for example, the combination of DSP and microprocessor, a plurality of microprocessors, one or more microprocessors incorporating the DSP core, or any other structures of this kind.

The steps of method described in the embodiments described hereinabove can be directly implemented by hardware, a software module executed by a processor, or the combination thereof. The software module can reside in a RAM memory, a flash memory, a ROM memory, an EPROM memory, an EEPROM memory, a register, a hard disk, a removable disk, a CD-ROM, or any other kinds of storage media known in the art. A typical storage medium is coupled with the processor so that the processor is capable of reading information from the storage medium and writing information to the storage medium. In an alternative example, the storage medium is an integral part of the processor. The processor and the storage medium may reside in an ASIC. The ASIC may reside in a user station. In an alternative example, the processor and the storage medium can be a separate component in the user station.

According to the disclosed embodiments, the person skilled in the art is enabled to implement or carry out the present invention. As for the person skilled in the art, various modifications to these embodiments are apparent, and the general principles defined herein can also be applied to other embodiments without departing from the scope and gist of the present invention. The embodiments described above are only the preferred embodiments of the present invention, and do not limit the present invention in any way. All of the modifications, equivalents, improvements or the like within the spirit and principle of the present invention should fall within the protection scope of the present invention.

## Claims

1. A device for transmitting digital broadcast signal, **characterized in that** the device comprises:
at least a first encoding unit, each of which performs forward error correction encoding on data in a sub-channel;
at least a time-domain interleaving unit, each of which receives the encoded data output from one first encoding unit and performs interleaving in time-domain on the encoded data;
a first multiplexing unit, which multiplexes the interleaved data in each sub-channel output from each of the time-domain interleaving unit into Main Service Channel (MSC) data;
a second encoding unit, which performs forward error correction encoding on a second set of data to obtain Fast Information Channel (FIC) data;
a differential modulating unit, which performs differential modulation on the FIC data by using a first modulation mode and on the MSC data by using a second modulation mode, wherein the modulation level of the first modulation mode is lower than that of the second modulation mode; and
a frame generating and transmitting unit, which generates signal unit transmission frames by using differential-modulation symbol sequences generated by the differential modulating unit and transmitting said signal unit transmission frames.

2. A device as claimed in claim 1, **characterized in that** the differential modulating unit performs differential modulation on the FIC data with Differential Quadrature Phase Shift Keying (DQPSK) mode.

3. A device as claimed in claim 1, **characterized in that** the differential modulating unit performs differential modulation on the MSC data with Octal Differential Phase Shift Keying (8DPSK) or 16-ary Differential Amplitude and Phase Shift Keying (16DAPSK) modes.

4. A device as claimed in claim 1, **characterized in that** the frame generating and transmitting unit performs orthogonal frequency-division multiplexing (OFDM) modulation on said differential-modulation symbol sequences along with phase reference symbols and empty symbols to generate respective OFDM symbols, and multiplexes the generated continuous OFDM symbols into the signal unit transmission frames.

5. A device as claimed in claim 1, **characterized in that** the frame generating and transmitting unit performs OFDM modulation on said differential-modulation symbol sequences along with phase reference symbols to generate respective OFDM symbols, and multiplexes the generated continuous OFDM symbols along with empty symbols into the signal unit transmission frames.

6. A device as claimed in any one of claims 1-5, **characterized in that** the second encoding unit performs punctured convolutional encoding on the second set of data.

7. A device as claimed in any one of claims 1-5, **characterized in that** the first encoding unit performs Low Density Parity Check (LDPC) encoding on the data in each sub-channel.

8. A device as claimed in any one of claims 1-5, **characterized in that** the device further comprises a plurality of first energy dispersing units, each of which performs energy dispersing on the data in one sub-channel and outputs the result to the first encoding unit of this sub-channel.

9. A device as claimed in any one of claims 1-5, **characterized in that** further comprises a second energy dispersing unit, which performs energy dispersing on the second set of data and outputs the results to the second encoding unit.

10. A device as claimed in any one of claims 1-5, **characterized in that** the second set of data comprises configuration information.

11. A method for transmitting digital broadcast signal, **characterized in that** the method comprises the steps of:
performing forward error correction encoding and interleaving in time-domain on the data in each sub-channel separately;
multiplexing the data interleaved in time-domain in each sub-channel into Main Service Channel (MSC) data;
performing forward error correction encoding on a second set of data to obtain Fast Information Channel (FIC) data;
performing differential modulation on the FIC data with a first modulation mode and on the MSC data with a second modulation mode, wherein the modulation level of the first modulation mode is lower than that of the second modulation mode;
generating signal unit transmission frames by using differential-modulation symbol sequences generated by the differential modulation and transmitting said signal unit transmission frames.

12. A method as claimed in claim 11, **characterized in that** the differential modulation is performed on the FIC data with Differential Quadrature Phase Shift Keying (DQPSK) mode.

13. A method as claimed in claim 11, **characterized in that** the differential modulation is performed on the MSC data with Octal Differential Phase Shift Keying (8DPSK) or 16-ary Differential Amplitude and Phase Shift Keying (16DAPSK).

14. A method as claimed in claim 11, **characterized in that** orthogonal frequency-division multiplexing (OFDM) modulation is performed on said differential-modulation symbol sequences along with phase reference symbols and empty symbols to generate respective OFDM symbols, and the generated continuous OFDM symbols are multiplexed into the signal unit transmission frames.

15. Method as claimed in claim 11, **characterized in that** OFDM modulation is performed on said differential-modulation symbol sequences along with phase reference symbols to generate respective OFDM symbols, and the generated continuous OFDM symbols along with empty symbols are multiplexed into the signal unit transmission frames.

16. A method as claimed in any one of claims 11-15, **characterized in that** punctured convolutional encoding is performed on the second set of data.

17. A method as claimed in any one of claims 11-15, **characterized in that** Low Density Parity Check (LDPC) encoding is performed on the data in each sub-channel.

18. A method as claimed in any one of claims 11-15, **characterized in that** before performing forward error correction encoding on the data in each sub-channel separately, the method further comprises the step of performing energy dispersing on the data in each sub-channel separately.

19. A method as claimed in any one of claims 11-15, **characterized in that** before performing forward error correction encoding on the second set of data information, the method further comprises the step of performing energy dispersing on the second set of data.

20. A method as claimed in any one of claims 11-15, **characterized in that** the second set of data comprises configuration information.

21. A system for transmitting digital broadcast signal, **characterized in that** the system comprises:
N devices for transmitting digital broadcast signal as claimed in any one of claims 1-10, wherein N is an integer larger than 1; and
a frequency-division multiplexing unit, which frequency-division multiplexes N-path signal unit transmission frames generated by said N devices for transmitting digital broadcast signal into one-path baseband transmission frame and transmits said baseband transmission frame.

22. A system as claimed in claim 21, **characterized in that** said frequency-division multiplexing unit moves said N-path signal unit transmission frames to N frequency points, wherein the interval between neighboring two frequency points is 1.544 MHz.

23. A system as claimed in claim 22, **characterized in that** N = 5.

24. A method for transmitting digital broadcast signal, **characterized in that** the method comprises the steps of:
generating N-path signal unit transmission frames by using a method for transmitting digital broadcast signal as claimed in any one of claims 11-20;
frequency-division multiplexing said N-path signal unit transmission frames into one-path baseband transmission frame and transmitting said baseband transmission frame.

25. A method as claimed in claim 24, **characterized in that** said N-path signal unit transmission frames are moved to N frequency points, wherein the interval between neighboring two frequency points is 1.544 MHz.

26. A method as claimed in claim 25, **characterized in that** N = 5.
